Europäisches Patentamt

European Patent Office

Office européen des brevets

(11) Veröffentlichungsnummer : **0 557 322 B1**

(19)

# (12) EUROPÄISCHE PATENTSCHRIFT

(45) Veröffentlichungstag der Patentschrift :
27.07.94 Patentblatt 94/30

(51) Int. Cl.⁵ : **B60G 17/01**

(21) Anmeldenummer : 91919107.2

(22) Anmeldetag : 05.11.91

(86) Internationale Anmeldenummer :
PCT/EP91/02086

(87) Internationale Veröffentlichungsnummer :
WO 92/08623 29.05.92 Gazette 92/12

(54) **SEMI-AKTIVES FAHRWERKSREGELUNGSSYSTEM.**

(30) Priorität : 13.11.90 DE 4036064

(43) Veröffentlichungstag der Anmeldung :
01.09.93 Patentblatt 93/35

(45) Bekanntmachung des Hinweises auf die
Patenterteilung :
27.07.94 Patentblatt 94/30

(84) Benannte Vertragsstaaten :
DE FR GB

(56) Entgegenhaltungen :
EP-A- 0 027 869
EP-A- 0 032 158
EP-A- 0 265 670
EP-A- 0 341 883

(56) Entgegenhaltungen :
Brammer, K., Siffling, G.:
"Kalman-Bucy-Filter", Methoden der Regelungstechnik, R. Oldenbourg Verlag, München
(DE), Wien (AT), 1975, Seiten 75-83
Proceedings of the Institution of Mechanical
Engineers, International Conference on Advanced Suspensions, 24-25 October 1988; The
Institution of Mechanical Engineers, Birdcage
Walk, London (GB), Seiten 35-42

(73) Patentinhaber : ITT Automotive Europe GmbH
Guerickestrasse 7
D-60441 Frankfurt (DE)

(72) Erfinder : HOFFMANN, Michael
Lutherstrasse 2
D-3550 Marburg (DE)
Erfinder : ECKERT, Alfred
Burgunderweg 12
D-6500 Mainz-Laubenheim (DE)

EP 0 557 322 B1

## Beschreibung

Die Erfindung bezieht sich auf ein semi-aktives Fahrwerksregelungssystem für Kraftfahrzeuge, bestehend im wesentlichen aus regelbaren Schwingungsdämpfern, aus Aufbaubeschleunigungssensoren mit nachgeschaltetem Filter zur Gewinnung der für die Regelung benötigten Informationen über das Fahrwerksverhalten sowie aus elektronischen Schaltkreisen zur Auswertung der Sensorsignale und Erzeugung von Dämpferansteuerungssignalen.

Für ein semi-aktives Fahrwerksregelungssystem ist die absolute Aufbaugeschwindigkeit die vorherrschende Regelgröße für die Komfortbewertung. Die Größe der Dämpfkraft, die für eine hohe Fahrsicherheit und hohen Regelkomfort benötigt wird, ist von der Aufbaugeschwindigkeit abhängig. Diese Regelgröße entzieht sich aber der direkten Messung. Ein gängiger Weg ist die Messung der Aufbaubeschleunigung und die Errechnung der Aufbaugeschwindigkeit durch Integration dieser Meßwerte.

Zur Realisierung einer semi-aktiven Fahrwerksregelung wird außerdem noch die Dämpfergeschwindigkeit benötigt. Durch Messung des Dämpferweges, d.h. des relativen Weges zwischen Rad und Aufbau, und Differentiation dieses Wertes oder durch Integration der Radbeschleunigung, die sich mit Beschleunigungsaufnehmer messen läßt, wird die Dämpfergeschwindigkeit ermittelt. Die Auswertung der verschiedenen Sensorsignale, die Integration und Differentiation sind bekanntlich mit zahlreichen Schwierigkeiten und Störeinflüssen verbunden.

Aus der Europäischen Anmeldungssschrift EP-A-0 341 883 ist bereits ein analog-digitales Verfahren und eine entsprechende Vorrichtung zur näherungsweisen Ermittlung der absoluten Aufbau-Geschwindigkeit für ein aktives oder semi-aktives Fahrerksregelungssystem bekannt. Bei diesem Verfahren wird mit Hilfe eines analogen Integrators, der auch einen Tiefpaßfilter erster Ordnung enthält, das Ausgangssignal eines Aufbaubeschleunigungssensors für den Regelalgorithmus ausgewertet, wobei weitere digitale Filter zur Abtrennung der Konstant- und Niedrigfrequenz-Komponenten zur Anwendung kommen. Das Regelungssystem enthält ferner Relativgeschwindigkeitssensoren, deren Ausgangssignale zum Einschalten und Ausschalten der Dämpfkraft, die mit variablen Schwingungsdämpfern aufgebracht wird, ausgewertet werden. Bei einem semi-aktiven Regelungssystem dieser bekannten Art werden also sowohl Sensoren zur Ermittlung der absoluten Aufbaubeschleunigung als auch der Relativbewegung zwischen Aufbau und Rad benötigt. Dies bedeutet einen erheblichen Aufwand.

Aus der Europäischen Patentanmeldung EP-A-0 032 158 ist ein aktives System zur Dämpfung von Fahrzeugschwingungen bekannt, bei dem die mit Aufbaubeschleunigungssensoren gewonnenen Signale als Regelgrößen dienen. Auf diese Weise lassen sich höchstens langsame Fahrwerksbewegungen dämpfen, nicht jedoch die schnellen Relativbewegungen zwischen Rad und Fahrzeugaufbau.

Ebenso ist in der EP-A-0 341 883 ein sogenanntes Kalman-Filter erwähnt. Dieses von Karl Brammer und Gerhard Siffling in dem Lehrbuch "Kalman-Bucy-Filter" unter der Reihe Methoden der Regelungstechnik vom R. Oldenbourg Verlag München (DE), Wien (AT), 1975, auf den Seiten 75 - 83 näher beschriebene und als "Filter" bezeichnete System ist genau genommen ein deterministischer Beobachter, der von der mathematischen Beschreibung des realen Systems ausgeht und die hieraus bestimmten, nicht oder nur mit hohem Aufwand meßbaren, (Modell-) oder Zustandsgrößen mittels eines die stochastischen Eigenschaften von Systemstörungen oder Meßfehlern berücksichtigenden Werts zu Schätzgrößen korrigiert, welche aus der Differenz meßbarer Ausgangsgrößen des realen Systems und der berechneten Ausgangsgrößen des Modells durch Filterung gewonnen werden. Der Einsatz derartiger Filter in realen Systemen benötigt jedoch eine hohe Rechenleistung, so daß sie wegen des hierfür erforderlichen Aufwands für den Einsatz in Fahrwerksregelungssystemen von Fahrzeugen nicht geeignet erscheinen.

Ferner sind beispielsweise aus "Proceedings of the Institution of Mechanical Engineers", International Conference on Advanced Suspensions, 24 - 25 October 1988; The Institution of Mechanical Engineers, Birdcage Walk, Londong (GB), Seiten 35 - 42, sogenannte 1/4-Fahrzeugmodelle und Vollfahrzeugmodelle, die das physikalische Verhalten von Rädern und Aufbau eines Kraftfahrzeugs mathematisch beschreiben, bekannt.

Der Erfindung liegt daher die Aufgabe zu Grunde, zur Vermeidung oder Verringerung dieser Schwierigkeiten und zur Reduzierung des Herstellungsaufwandes mit möglichst wenigen Sensoren auszukommen.

Die Aufgabe ist durch die Merkmale des Anspruchs 1 gelöst. Demnach wird bei einem semi-aktiven Fahrwerksregelungssystem der eingangs genannten Art das Übertragungsverhalten des Filters unter Konzentration auf einen Frequenzbereich, dessen untere Grenze etwa bei dem 0,1 - 0,5fachen der Eigenfrequenz des Fahrzeugaufbaus und dessen obere Grenze etwa bei dem 1,2 - 2fachen der Eigenfrequenz des Rades liegen, dem Übertragungsverhalten eines das ganze auftretende Frequenzspektrum abdeckenden, auf der Basis eines Fahrzeugmodells berechneten Filters linear angenähert, und es werden die Ausgangssignale des Filters, welche der tatsächlichen Dämpfergeschwindigkeit oder einem die Dämpfergeschwindigkeit wiedergebenden Signal entsprechen, zur Ermittlung der Dämpferansteuerungssignale ausgewertet. Es werden also ausschließlich Aufbaubeschleunigungssensoren zur Gewinnung der Informationen für die Dämpfkraftregelung verwendet.

Als besonders zweckmäßig hat es sich erwiesen, das Übertragungsverhalten des angenäherten Filters auf einen Bereich zwischen 0,2 und 20 Hz, insbesondere zwischen 0,5 und 16 Hz zu konzentrieren.

Durch die Konzentration auf den angegebenen Frequenzbereich wird erreicht, daß gerade innerhalb dieses Bereiches das Übertragungsverhalten dieses vereinfachten Filters dem Übertragungsverhalten eines vollständigen Kalmann-Filters angenähert wird.

Nach einer vorteilhaften Ausführungsart der Erfindung wird das Übertragungsverhalten des Filters durch Berechnung eines Kalman-Filters für 1/4 Fahrzeugmodell und Anpassung an ein vorgegebenes Straßen- bzw. Störprofil festgelegt.

Obwohl für die Fahrwerkregelung die Aufbaubeschleunigung bzw. Aufbaugeschwindigkeit an jedem Rad bekannt sein muß, genügen drei, jeweils an einer Fahrzeugecke angeordnete Aufbaubeschleunigungssensoren, weil sich aus deren Meßwerte auch die Aufbaubeschleunigung an der vierten Fahrzeugecke errechnen läßt.

Durch die Beschränkung auf Aufbaubeschleunigungssensoren wird folglich der benötigte Aufwand für das semi-aktive Fahrwerksregelungssystem im Vergleich zu den bekannten Systemen dieser Art, die sowohl Aufbaubeschleunigungs- als auch Dämpferwegsensoren benötigen, erheblich verringert. Darüberhinaus wird durch Vermeidung der mit der Auswertung zahlreicher Sensoren verbundenen Schwierigkeiten die Regelgüte noch erhöht.

Weitere Merkmale, Vorteile und Anwendungsmöglichkeiten der Erfindung gehen aus der folgenden Darstellung weiterer Einzelheiten und aus den beigefügten Abbildungen hervor.

Es zeigen

Figur 1    in Prinzipdarstellung die wesentlichen Komponenten eines Fahrwerksregelungssystem nach der Erfindung,

Figur 2    im Diagramm die Dämpfergeschwindigkeit bei einem Dämpfungsvorgang, und zwar den Verlauf der "echten" Dämpfergeschwindigkeit im Vergleich zu der "geschätzten" Geschwindigkeit, ermittelt an Hand eines Simulationsmodells,

Figur 3    in gleicher Darstellungsweise wie Figur 2 die gleichen Meßgrößen, ermittelt an Hand eines anderen Fahrzeugmodells, und

Figur 4    in gleicher Darstellungsweise wie Figur 2 und 3 die gleichen Meßgrößen, ermittelt in einem Fahrtest.

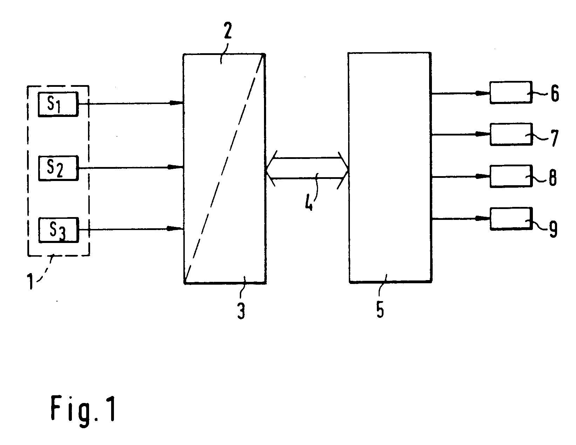

Aus Figur 1 ist ersichtlich, daß das erfindungsgemäße Fahrwerksregelungssystem im wesentlichen aus drei Aufbaubeschleunigungssensoren $S_1$, $S_2$, $S_3$, in ihrer Gesamtheit mit 1 bezeichnet, aus elektronischen Schaltkreisen 2 - 5 und aus Proportionalventilen 6, 7, 8, 9, mit denen die Dämpferkraft eingestellt wird, besteht.

In dem ersten elektronischen Schaltkreis 2 + 3, dem die Sensorsignale $S_1$, $S_2$, $S_3$ zugeleitet werden, wird die Aufbaubeschleunigung und die Aufbaugeschwindigkeit an den vier Ecken des Kraftfahrzeuges ermittelt. 2 symbolisiert den Bereich, in dem die Sensorsignale aufbereitet werden und das Verhalten des Aufbaus an allen vier Fahrzeugecken ermittelt wird. In dem zweiten elektronischen Schaltkreis 5 werden schließlich durch Auswertung der Informationen, die die Sensoren $S_1$ bis $S_3$ liefern, die Dämpferansteuerungssignale ermittelt und den Ventilen 6 bis 9 zugeführt.

Der erste Schaltkreis 2 + 3 enthält auch diejenigen Filter 3, mit denen aus den Sensorsignalen die tatsächliche Dämpfergeschwindigkeit bzw. ein die Dämpfergeschwindigkeit wiedergebendes Signal ermittelt wird.

Ein wesentliches Merkmal der Erfindung ist die Auslegung des Filters 3. Die umfassendste Möglichkeit zur Errechnung der benötigten Zustandsgrößen aus Signalen, wie sie von den Sensoren $S_1$ bis $S_2$ geliefert werden, bietet bekanntlich ein Kalman-Filter oder ein anderes das ganze auftretende Frequenzspektrum abdeckendes Filter. Solche Filter haben jedoch bekanntlich den Nachteil eines sehr hohen Rechenaufwandes und großer Rechenzeiten. Erfindungsgemäß wird daher die Filtercharakteristik eines diskreten Kalman-Filters mit einer rechnerisch sehr viel einfacheren Übertragungsstruktur angenähert, ohne dabei die wesentlichen Eigenschaften des Filters zu verlieren. Zu diesem Zweck wird ein Kalman-Filter für ein linearisiertes 1/4 Fahrzeugmodell berechnet und an ein gegebenes Straßen- bzw. Störprofil angepaßt. Für die kontinuierliche Übertragungsfunktion H(s) eines solchen Filters gilt die Beziehung

$$H(s) = \frac{-T_D s}{(1 + T_1 s)(1 + T_2 s)}$$

mit

$$T_D \approx M_b / c_F$$

$$T_1 \approx 2.......5 \times 1/2 \, \pi \, f_A$$
$$T_2 \approx 0,5.....0,8 \times 1/2 \, \pi \, f_R$$

wobei bedeuten:

$M_b$ = Masse des Fahrzeugaufbaus

$c_F$ = Federkonstante der Radaufhängung

$s$ = Laplace-Operator

$f_A$ = Aufbaueigenfrequenz

$f_R$ = Radeigenfrequenz

Die entsprechende diskrete Übertragungsfunktion $H\,(z^{-1})$ lautet:

$$H(z^{-1}) = \frac{-T_D}{T_1 - T_2} (\lambda_1 - \lambda_2) \frac{1 - z^{-1}}{1 - (\lambda_1 + \lambda_2)\, z^{-1} + \lambda_1 \lambda_2 \, z^{-2}}$$

mit

$\lambda_1 = \quad e^{-T_o/T_1}$

$\lambda_2 = \quad e^{-T_o/T_2}$

$T_o = \quad$ Abtastzeit

$T_D \quad M_b/c_F$

$z \quad$ Operator der diskreten Übertragungsunktion.

Für den Berechnungsalgorithmus gilt dann:

$$V_F(k) = (\lambda_1 + \lambda_2)\, V_F\,(k - 1) - \lambda_1 \lambda_2 \, V_F\,(k - 2) - M\,(a_B(k) - a_B(k - 1))$$

mit

$$M = \frac{T_D}{T_1 - T_2} (\lambda_1 - \lambda_2)$$

$V_F$ = berechnete Dämpfergeschwindigkeit

$a_B$ = Aufbaubeschleunigung

Erfindungsgemäß wird also das Filter durch eine lineare Annäherung an ein das ganze auftretende Frequenzspektrum abdeckendes Filter, wie an ein Kalman-Filter festgelegt, wobei eine Konzentration auf den nutzbaren Frequenzbereich, nämlich auf den Frequenzbereich zwischen der Aufbaueigenfrequenz und der Radeigenfrequenz, erfolgt. Im Vergleich zu einem Kalman-Filter wird eine rechnerisch wesentlich einfachere Übertragungsstruktur gewählt. Dadurch wird der erforderliche Rechenaufwand - im Vergleich zu einem Kalman-Filter - erheblich verringert. Dennoch erhält man ein Signal, das für eine Fahrwerksregelung ausreichend genau die Dämpfergeschwindigkeit wiedergibt. Störimpulse werden unterdrückt. Das Signal läßt sich vergleichsweise einfach durch Mikrocomputerprogramme verarbeiten.

Bei der Festlegung der Übetragungsfunktion des erfindungsgemäßen Filters wird auf einen Frequenzbereich besonderen Wert gelegt, der etwas unterhalb der Aufbaueigenfrequenz beginnt und sich etwa bis zum 1,2 oder 2-fachen der Radeigenfrequenz erstreckt. Diese Konzentration kann beispielsweise auf einen Frequenzbereich von 0,5 bis 16 Hz erfolgen.

Das erfindungsgemäße Filter 3 überträgt - im Gegensatz zu einem Kalman-Filter - keine langsamen Drifteinflüsse, weil eine untere Grenzfrequenz vorgegeben ist. Das Filter hat keine Offsetprobleme und unterdrückt höherfrequente Störungen. Die Anzahl der notwendigen Rechenoperationen zur Auswertung des Signals ist relativ gering, so daß ein üblicher Mikrocomputer mit Fest-Komma-Arithmetik die Algorithmen berechnen kann. Der "Schätzfehler", nämlich der Fehler durch Vereinfachung der Übertragungsfunktion im Vergleich zu einem Kalman-Filter, ist dabei sehr klein. Ferner reagiert das erfindungsgemäße Filter unempfindlich auf Parameterschwankungen des Fahrzeugs, wie Zuladung, nichtlineare variable Dämpfung usw.

Da für die semi-aktive Fahrwerksregelung nur der Nulldurchgang bzw. das Vorzeichen der Dämpfergeschwindigkeit benötigt wird, sind Meßfehler durch falsche Sensorpositionierung oder durch ähnliche Effekte relativ gering.

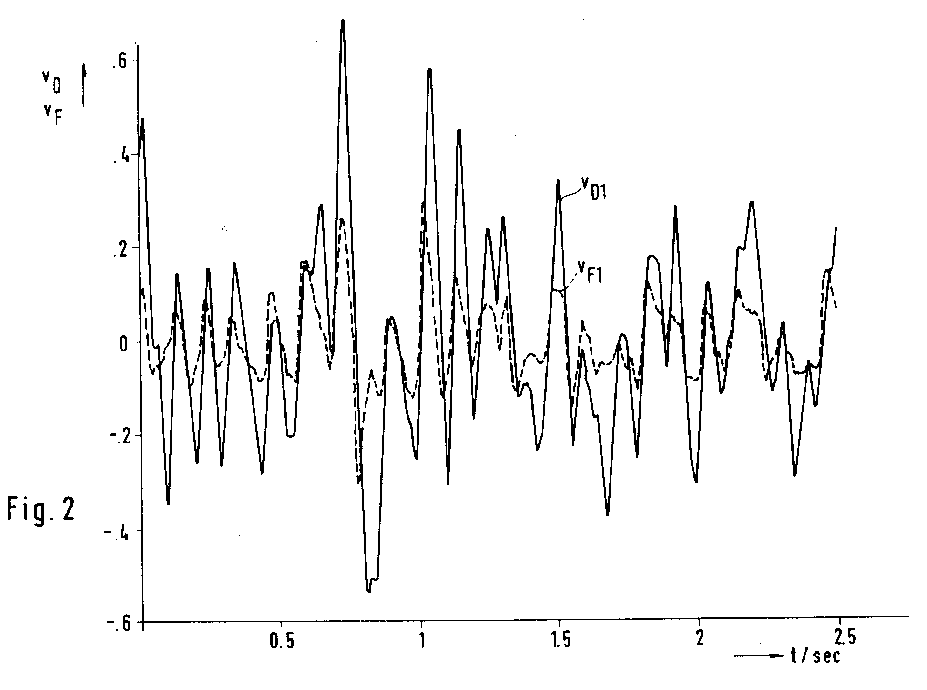

Die Diagramme, Figuren 2 bis 4, zeigen die gute Übereinstimmung der mit dem erfindungsgemäßen Filter 3 ermittelten Dämpfergeschwindigkeit $v_F$ mit den tatsächlichen Werten $v_D$.

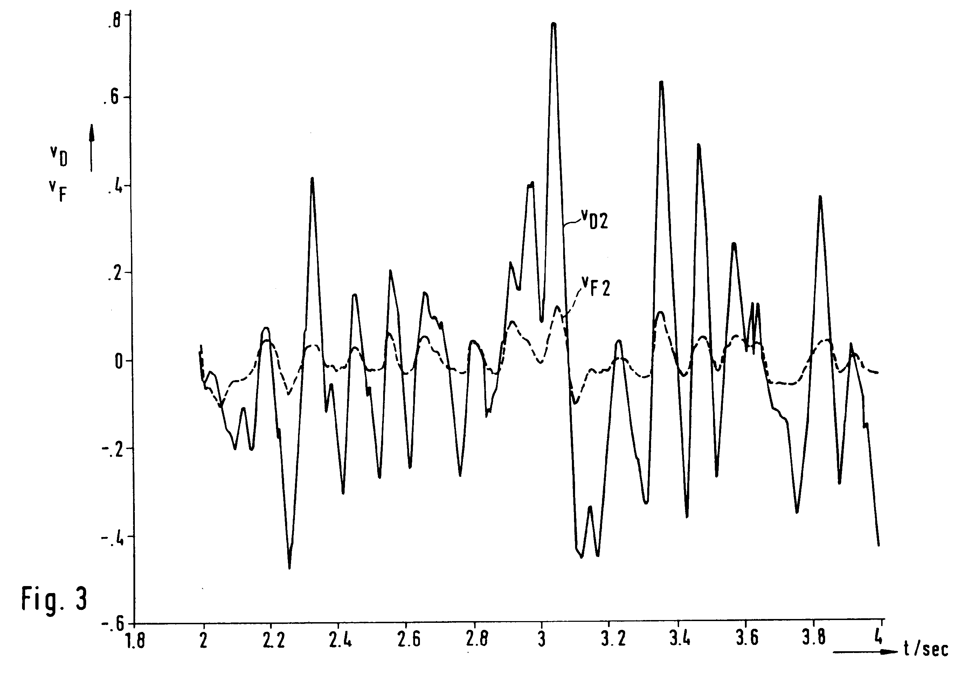

Die Kurven nach Figur 2 und Figur 3 wurden durch Simulationen gewonnen. Figur 2 bezieht sich auf eine Simulation mit einem nichtlinearen 1/4 Fahrzeugmodell. Dieses Modell beinhaltet eine nichtlineare Feder, einen nichtlinearen und proportional verstellbaren Dämpfer und ein hochwertiges Fahrwerksregelungssystem. Die Straße ist eine standardisierte Teststraße, eine sogenannte Random-Road, die einer schlechten Straße entspricht. Gezeigt ist in Figur 2 der Verlauf der "echten" Dämpfergeschwindigkeit $v_{D1}$ gegenüber der "geschätzten", mit Hilfe des erfindungsgemäßen Filters gewonnenen Geschwindigkeit $v_{F1}$. Die mit dem erfindungsgemäßen Filter gewonnene Kennlinie ist in Figur 2 mit abweichendem Maßstab abgebildet; da nur Nulldurchgänge in erster Linie bestimmend sind, wurde auf eine Skalierung verzichtet. Man erkennt die gute Übereinstimmung der beiden Signale $v_{D1}$ und $v_{F1}$. Die mit dem vollständigen Kalman-Filter, das den gesamten Frequenzbereich erfaßt, gewonnene Kurve $v_{D1}$ zeigt bezüglich der Richtung und den Nulldurchgängen fast den gleichen Verlauf wie das "geschätzte" Signal $v_{F1}$.

Die Darstellung der Dämpfergeschwindigkeit $v_{D2}$ nach Figur 3 wurde mit Hilfe eines nichtlinearen Vollfahrzeugmodells (ADAMS) berechnet. Dieses bekannte und vielfach gebrauchte Modell ist mit realen Achskinematiken, Steifheiten und gemessenen Feder- und Dämpferkennlinien ausgestattet. Darüberhinaus sind proportional verstellbare Dämpfer und ein hochwertiges Fahrwerksregelungssystem einbezogen. Auch in diesem Beispiel ist eine sehr gute Übereinstimmung des "echten" Signalverlaufs $v_{D2}$ mit dem "geschätzten" Signalverlauf $v_{F2}$ festzustellen.

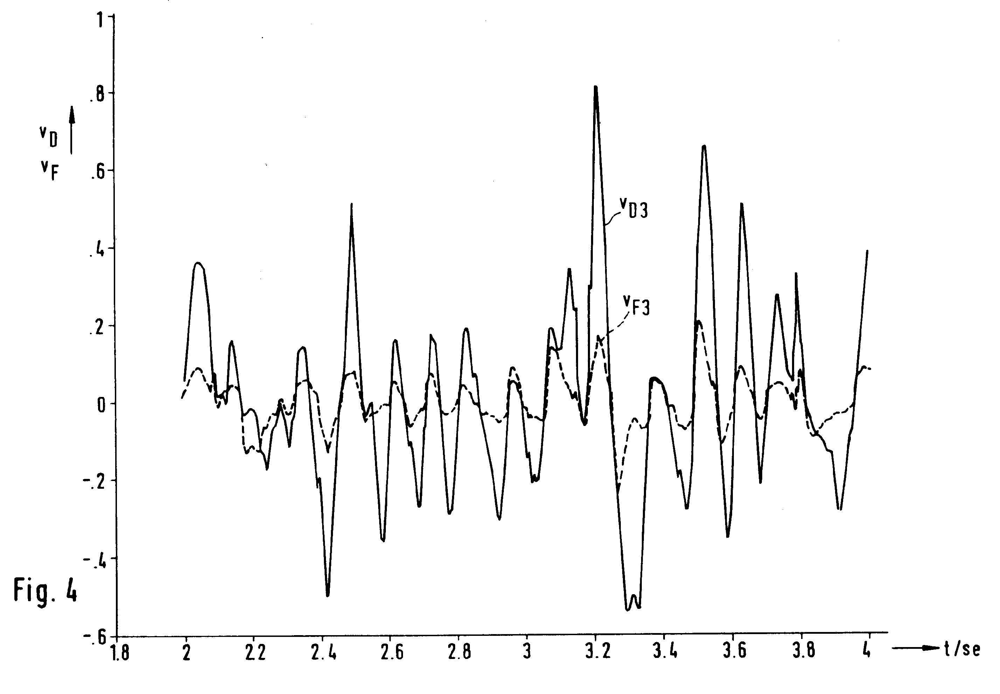

Schließlich sind in Figur 4 noch die entsprechenden Signalverläufe durch Messung an einem Testfahrzeug wiedergegeben. Die Signale wurden wiederum in abweichendem Maßstab aufgetragen, weil die Nulldurchgänge und die Signalrichtung praktisch allein von Bedeutung sind. Es besteht eine ähnlich gute Übereinstimmung zwischen den Signalverläufen $v_{D3}$ und $v_{F3}$ wie in den Figuren 2 und 3.

## Patentansprüche

1. Semi-aktives Fahrwerksregelungssystem für Kraftfahrzeuge, bestehend im wesentlichen aus regelbaren Schwingungsdämpfern, aus Aufbaubeschleunigungssensoren ($S_1$ - $S_3$) mit nachgeschaltetem Filter (3) zur Gewinnung der für die Regelung benötigten Informationen über das Fahrwerksverhalten sowie aus elektronischen Schaltkreisen (2,3,5) zur Auswertung der Sensorsignale und Erzeugung von Dämpferansteuerungssignalen, dadurch **gekennzeichnet**, daß das Übertragungsverhalten des Filters (3) unter Konzentration auf einen Frequenzbereich, dessen untere Grenze etwa bei dem 0,1 - 0,5fachen der Eigenfrequenz des Fahrzeugaufbaus und dessen obere Grenze etwa bei dem 1,2 - 2fachen der Eigenfrequenz des Rades liegen, dem Übertragungsverhalten eines das ganze auftretende Frequenzspektrum abdeckenden, auf der Basis eines Fahrzeugmodells berechneten Filters linear angenähert ist, und daß die Ausgangssignale ($V_F$) des Filters (3), welche der Dämpfergeschwindigkeit oder einem die Dämpfergeschwindigkeit wiedergebenden Signal entsprechen, zur Ermittlung der Dämpferansteuerungssignale ausgewertet werden.

2. Fahrwerksregelungssystem nach Anspruch 1, dadurch **gekennzeichnet**, daß das Übertragungsverhalten des angenäherten Filters (3) auf einen Bereich zwischen etwa 0,2 und 20 Hz, insbesondere zwischen 0,5 und 16 Hz, konzentriert ist.

3. Fahrwerksregelungssystem nach Anspruch 1 oder 2, dadurch **gekennzeichnet**, daß das Übertragungsverhalten des Filters (3) durch Berechnung eines Kalman-Filters für 1/4 Fahrzeugmodell und Anpassung an ein vorgegebenes Straßen- bzw. Störprofil festgelegt wird.

4. Fahrwerksregelungssystem nach einem oder mehreren der Ansprüche 1 bis 3, dadurch **gekennzeichnet**, daß für das Filter (3) die kontinuierliche Übertragungsfunktion H(s) gilt:

$$H(s) \; = \; \frac{- \, T_D s}{(1 \, + \, T_1 s) \, (1 \, + \, T_2 s)}$$

mit

$T_D \approx M_b \, / \, c_F$
$T_1 \approx 2.......5 \times 1/2 \, \pi \, f_A$
$T_2 \approx 0,5.....0,8 \times 1/2 \, \pi \, f_R$
wobei bedeuten:
$M_b$ = Masse des Fahrzeugaufbaus
$c_F$ = Federkonstante der Radaufhängung
$s$ = Laplace-Operator
$f_A$ = Aufbaueigenfrequenz
$f_R$ = Radeigenfrequenz

5. Fahrwerksregelungssystem nach einem oder mehreren der Ansprüche 1 bis 4, dadurch **gekennzeichnet**, daß an jeder Fahrzeugecke jeweils ein Aufbaubeschleunigungssensor vorgesehen ist.

6. Fahrwerksregelungssystem nach einem oder mehreren der Ansprüche 1 bis 4, dadurch **gekennzeichnet**, daß an drei der vier Fahrzeugecken je ein Aufbaubeschleunigungssensor ($S_1$, $S_2$, $S_3$) vorgesehen ist und

die Aufbaubeschleunigung an der vierten Fahrzeugecke aus den Messungen der drei Aufbaubeschleunigungssensoren ($S_1$, $S_2$, $S_3$) errechnet wird.

## Claims

1. A semi-active suspension control system for automotive vehicles which is substantially composed of controllable vibration dampers, chassis acceleration sensors ($S_1$ to $S_3$) with a filter (3) connected downstream thereof for obtaining the information about the chassis performance required for the control, and electronic circuits (2, 3, 5) for assessing the sensor signals and for generating damper-actuating signals, **characterized** in that the transmission behaviour of the filter (3) in a semi-active suspension control system of the type initially referred to is approximated linearly to the transmission behaviour of a filter which covers the entire frequency spectrum occurring and is calculated on the basis of a vehicle model by concentrating on a frequency spectrum, the bottom limit of which corresponds approximately to the 0.1-fold up to the 0.5-fold of the natural chassis frequency of the vehicle chassis, while its top limit corresponds approximately to the 1.2-fold up to the 2-fold of the natural wheel frequency, and in that the output signals ($v_F$) of the filter (3) which correspond to the damper speed or to a signal indicative of the damper speed are assessed to determine the damper-actuating signals.

2. A suspension control system as claimed in claim 1,
**characterized** in that the transmission behaviour of the approximated filter (3) concentrates on a range between roughly 0.2 and 20 hertz, more particularly between 0.5 and 16 hertz.

3. A suspension control system as claimed in claim 1 or claim 2,
**characterized** in that the transmission behaviour of the filter (3) is set by calculating a Kalman filter for 1/4 vehicle model and by adapting to a predetermined road and, respectively, disturbance pattern.

4. A suspension control system as claimed in any one or more of the claims 1 to 3,
**characterized** in that the continuous transmission function H(s) applies for the filter (3):

$$H(s) = \frac{-\,T_D s}{(1 + T_1 s)\,(1 + T_2 s)}$$

mit

$T_D \approx M_b\,/\,c_F$
$T_1 \approx 2.......5 \times 1/2\,\pi\,f_A$
$T_2 \approx 0{,}5.....0.8 \times 1/2\,\pi\,f_R$

where:
$M_b$ = mass of the vehicle chassis
$c_F$ = spring rate of the wheel suspension
$s$ = Laplace operator
$f_A$ = natural chassis frequency
$f_R$ = natural wheel frequency.

5. A suspension control system as claimed in any one or more of the claims 1 to 4,
**characterized** in that one chassis acceleration sensor is provided on each vehicle corner.

6. A suspension control system as claimed in any one or more of the claims 1 to 4,
**characterized** in that on three of the four vehicle corners one chassis acceleration sensor ($S_1$, $S_2$, $S_3$) each is provided, and in that the chassis acceleration on the fourth vehicle corner is calculated from the measurements of the three chassis acceleration sensors ($S_1$, $S_2$, $S_3$).

## Revendications

1. Système semi-actif de régulation de châssis pour véhicules automobiles, constitué essentiellement par des amortisseurs réglables de vibrations, par des capteurs ($S_1$ à $S_3$) d'accélération de la carrosserie en aval desquels est branché un filtre (3) pour l'obtention des informations qui sont nécessaires pour la régulation et concernent le comportement du châssis, ainsi que par des circuits électroniques (2, 3, 5) servant à évaluer les signaux des capteurs et à produire des signaux de commande des amortisseurs, caractérisé en ce que grâce à une concentration à une gamme de fréquences dont la limite inférieure est égale approximativement à 0,1 à 0,5 fois la fréquence propre de la carrosserie du véhicule et dont la limite supérieure est égale approximativement à 1,2 à 2 fois la fréquence propre de la roue, le comportement de transmission du filtre (3) est approximée avec une forme linéaire sur la base du comportement de transmission d'un filtre qui couvre l'ensemble du spectre des fréquences qui apparaît, et est calculé sur la base d'un modèle du véhicule, et en ce que les signaux de sortie ($v_F$) du filtre (3) qui correspondent à la vitesse d'amortissement ou à un signal reproduisant la vitesse d'amortissement, sont évalués pour la détermination des signaux de commande des amortisseurs.

2. Système de régulation de châssis selon la revendication 1, caractérisé en ce que le comportement de transmission du filtre approximé (3) est concentré dans une gamme comprise entre environ 0,2 et 20 Hz et notamment entre 0,5 et 16 Hz.

3. Système de régulation de châssis selon la revendication 1 ou 2, caractérisé en ce que le comportement de transmission du filtre (3) est fixé par calcul d'un filtre Kalman pour un modèle du véhicule réalisé dans le rapport 1/4, et adaptation à un profil prédéterminé de chaussée ou à un profil perturbateur prédéterminé.

4. Système de régulation de châssis selon une ou plusieurs des revendications 1 à 3, caractérisé en ce que pour le filtre (3), on a la fonction de transfert continue (Hs) :

$$H(s) \; = \; \frac{- \; T_D s}{(1 \; + \; T_1 s) \, (1 \; + \; T_2 s)}$$

mit

$T_D \approx M_b \, / \, c_F$
$T_1 \approx 2.......5 \times 1/2 \, \pi \, f_A$
$T_2 \approx 0,5.....0,8 \times 1/2 \, \pi \, f_R$

avec :

$M_b$ = masse de la carrosserie du véhicule,
$c_F$ = constante d'élasticité de la suspension de roue,
$s$ = opérateur de Laplace,
$f_A$ = fréquence propre de la carrosserie,
$f_R$ = fréquence propre de la roue.

5. Système de régulation de châssis selon une ou plusieurs des revendications 1 à 4, caractérisé en ce qu'un capteur de l'accélération de la carrosserie est prévu au niveau de chaque angle de la carrosserie.

6. Système de régulation de châssis selon une ou plusieurs des revendications 1 à 4, caractérisé e n ce qu'un capteur ($S_1$, $S_2$, $S_3$) de l'accélération de la carrosserie est prévu au niveau de trois des quatre angles du véhicule, et l'accélération de la carrosserie au niveau des quatre angles du véhicule est calculée à partir des mesures effectuées par les trois capteurs ($S_1$, $S_2$, $S_3$) de l'accélération de la carrosserie.

Fig.1

Fig. 2

EP 0 557 322 B1

Fig. 3

Fig. 4

EP 0 557 322 B1